# EUROPEAN PATENT SPECIFICATION

(11) **EP 4 316 716 B1**
(45) Date of publication and mention of the grant of the patent: **31.12.2025**
(21) Application number: 23185747.5
(22) Date of filing: 17.07.2023
(51) Int. Cl.: B23K 9/095, B23K 9/16, B23K 9/32, B23K 31/12, G01S 5/18

(54) **WELD TRACKING SYSTEM USING AN ACOUSTIC TRACKING**
SCHWEISSÜBERWACHUNGSSYSTEM UNTER VERWENDUNG EINER AKUSTISCHEN VERFOLGUNG
SYSTÈME DE SUIVI DE SOUDURE UTILISANT UN SUIVI ACOUSTIQUE

(30) Priority: 18.07.2022 US 202263390133 P; 10.07.2023 US 202318219937
(43) Date of publication of application: 07.02.2024
(73) Proprietor: Illinois Tool Works Inc., Glenview IL 60025 (US)
(72) Inventor: BECKER, William Joshua, Glenview, 60025 (US)
(74) Representative: HGF

(56) References cited:
- US-A1- 2014 160 880
- US-A1- 2015 072 323
- US-A1- 2016 175 976
- US-A1- 2021 033 696

## Description

The present invention generally relates to welding technique monitoring systems, and, more particularly, to welding technique monitoring systems using acoustic tracking, see claim 1.

### BACKGROUND

Welding technique generally refers to the way in which a welding operator positions, moves, and/or manipulates a welding-type tool relative to a workpiece (and/or a welding joint of the workpiece), such as, for example, during a welding-type operation. Good welding technique can positively impact the quality of a weld. Bad welding technique can negatively impact the quality of a weld. However, it can sometimes be difficult for (e.g., less experienced) human operators to accurately judge whether welding technique is good or bad. Prior patent document US 2016/0175976 A1 (describing the preamble of claim 1) shows a welding system having a modulation circuit, a weld torch, and a sensor system. Prior patent document US 2021/033696 A1 describes a method includes communicating first and second signals between a first node and a second node. Prior patent document US 2014/0160880 A1 describes ultrasonic ranging for mobile devices.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present invention is directed to welding technique monitoring systems, substantially as illustrated by and/or described in connection with the figures. A weld tracking system according to a first aspect of the present invention is defined in claim 1. Further preferred embodiment of this first aspect of the present invention are defined in the dependent claims.

These and other advantages, aspects and novel features of the present invention as well as details of an illustrated example thereof, will be more fully understood from the following description and drawings.

### BRIEF DESCRIPTION OF THE DRAWINGS

FIG. 1 shows an example of a welding system, in accordance with aspects of this disclosure.
FIG. 2 illustrates an example arrangement of tracking anchors and tracking tags that might be used by a tracking system to track objects and/or persons of the welding system of FIG. 1, in accordance with aspects of this disclosure.
FIG. 3 is a block diagram showing an example welding technique monitoring system comprising the example tracking anchors, tracking tags, and tracking system of FIG. 2, in accordance with aspects of this disclosure.
FIG. 4 is a flow diagram illustrating an example monitoring process of the example welding technique monitoring system of FIG. 3, in accordance with aspects of this disclosure.

The figures are not necessarily to scale. Where appropriate, the same or similar reference numerals are used in the figures to refer to similar or identical elements. For example, reference numerals utilizing lettering (e.g., workpiece 122a, workpiece 122b) refer to instances of the same reference numeral that does not have the lettering (e.g., workpieces 122).

### DETAILED DESCRIPTION

The present disclosure relates to a weld tracking system, comprising: a plurality of tracking anchors, each of the tracking anchors configured to: transmit a triggering signal, and transmit a response signal, or receive the response signal from a tracking tag; a welding device having the tracking tag attached to the welding device, the tracking tag configured to receive the triggering signal and receive the response signal, or receive the triggering signal and transmit the response signal in response to receiving the triggering signal; and a processing system configured to: determine distances between each of the tracking anchors and the tracking tag based on a time between the response signal being received and the triggering signal being sent or received, and determine a location of the welding device based on predetermined locations of the plurality of tracking anchors, and based on determined distances between the tracking tag on the welding device and corresponding ones of the plurality of tracking anchors.

In some examples, the processing system is configured to determine positions of the plurality of tracking anchors based on a predetermined spatial relationship between the plurality of tracking anchors and based on a calibration process to determine positions of two or more of the plurality of tracking anchors in the predetermined spatial relationship with respect to a reference location. In some examples, the welding device is at least one of a welding torch, a welding helmet, safety glasses, or a welding fixture. In some examples, the processing system is configured to determine the location of the welding device with respect to the reference location based on the positions of the plurality of tracking anchors.

According to the invention, the triggering signal is an electromagnetic signal and the response signal is an acoustic signal. In some examples, the triggering signal is a radiofrequency signal. In some examples, the triggering signal is an ultrasonic signal.

In some examples, the welding device has a plurality of tracking tags attached to the welding device, and the processing system is configured to determine the location of the welding device based on measuring the locations of the plurality of tracking tags. In some examples, the processing system is configured to determine an orientation of the welding device based on measuring the locations of the plurality of tracking tags on the welding device and based on a rigid body model of the welding device and the plurality of tracking tags on the welding device. In some examples, the welding device is a welding torch, and the processing system is configured to determine a welding performance based on a plurality of locations of the welding device during a welding operation.

In some examples, the tracking tag or each of the tracking anchors is configured to transmit the response signal as an ultrasonic signal having a frequency selected to avoid interference from welding-based noise. In some examples, the weld tracking system further comprises a noise monitor configured to measure ultrasonic frequencies in an environment proximate to the tracking anchors and the tracking tag, and configured to transmit feedback representative of at least one of a preferred ultrasonic channel or ultrasonic frequency or a non-preferred ultrasonic channel or ultrasonic frequency. In some examples, the plurality of tracking anchors are configured to transmit the triggering signal having data representative of the at least one of a preferred ultrasonic channel or ultrasonic frequency or a non-preferred ultrasonic channel or ultrasonic frequency, and the tracking tag is configured to select an ultrasonic channel to transmit the response signal based on the data in the triggering signal.

In some examples, the tracking tag or each of the tracking anchors is configured to receive the feedback from the noise monitor and select an ultrasonic channel to transmit the response signal based on the feedback. In some examples, the tracking tag or each of the tracking anchors is configured to select an ultrasonic channel to transmit the response signal based on a table having ultrasonic frequency data associated with at least one of a welding parameter or a welding process. In some examples, the plurality of tracking anchors are configured to: determine, based on a table having ultrasonic frequency data associated with at least one of a welding parameter or a welding process, at least one of a preferred ultrasonic channel or ultrasonic frequency or a non-preferred ultrasonic channel or ultrasonic frequency; and transmit the triggering signal having data representative of the at least one of a preferred ultrasonic channel or ultrasonic frequency or a non-preferred ultrasonic channel or ultrasonic frequency, and the tracking tag is configured to select an ultrasonic channel to transmit the response signal based on the data in the triggering signal.

In some examples, the welding device comprises: three or more tracking tags spatially separated in a fixed rigid configuration; two spatially separated tracking tags rigidly connected to each other, each of the tracking tags comprising an accelerometer configured to measure the angle of the tracking tag relative to gravity; or a single tracking tag having an accelerometer and a gyroscope, wherein the processing system is configured to determine a six-degree-of-freedom location and orientation of the welding device based on the three or more tracking tags, the two tracking tags, or the one tracking tag. In some examples, the plurality of tracking anchors are affixed to one or more rigid structures defining a rigid spatial relationship between the ones of the tracking anchors affixed to the respective rigid structure. In some examples, the rigid structures are portable. In some examples, the processing system is configured to determine, based on the location of the welding device and a rigid body model of the tracking tag and the welding device, at least one of a work angle, a travel angle, a travel direction, a travel speed, or a contact tip to work distance of a welding torch during a live welding operation or a simulated welding operation.

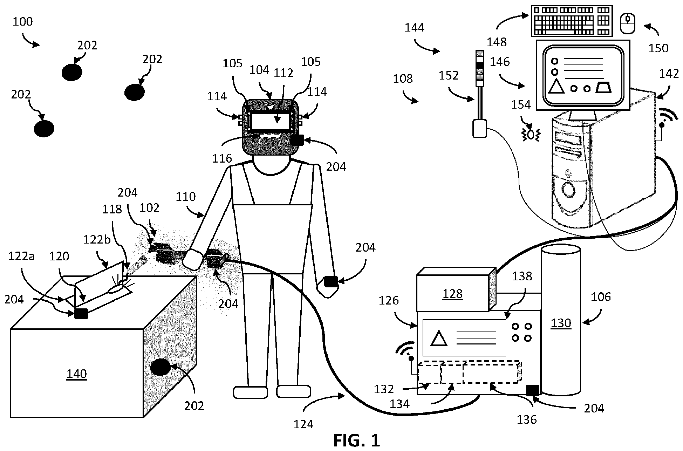

FIG. 1 shows an example welding system 100. As shown, the welding system 100 includes a welding-type tool 102, welding helmet 104, welding equipment 106, and computing system 108.

While shown as a welding torch or gun configured for gas metal arc welding (GMAW) in the example of FIG. 1, in some examples, the welding-type tool 102 may instead be a different kind of welding-type tool 102. For example, the welding-type tool 102 may be an electrode holder (i.e., stinger) configured for shielded metal arc welding (SMAW), a torch and/or filler rod configured for gas tungsten arc welding (GTAW), a welding gun configured for flux-cored arc welding (FCAW), and/or a plasma cutter. While shown as a live welding-type tool 102 in the example of FIG. 1, in some examples, the welding-type tool 102 may be a mock welding-type tool, and/or be configured for mock (as opposed to live) welding-type operations, such as for (e.g., virtual/augmented reality) weld training.

In the example of FIG. 1, the welding-type tool 102 is shown being held by an operator 110 wearing the welding helmet 104. In the example of FIG. 1, the welding helmet 104 includes a helmet shell, helmet display screen 112, helmet user interface (UI) devices 114, helmet sensors 105, and helmet circuitry 116. In some examples, the helmet UI devices 114 may include knobs, buttons, levers, switches, touch screens, microphones, speakers, haptic devices, lights (e.g., LEDs), eye trackers, and/or other appropriate helmet UI devices 114. In some examples, the helmet display screen 112 may be considered part of the helmet UI devices 114.

In some examples, the helmet sensors 105 may include optical, camera, infra-red, heat, ultrasonic, electromagnetic, and/or other appropriate sensors. In some examples, the helmet sensors 105 may be used to determine whether a (e.g., live) welding-type operation is taking place (e.g., via measurement of accompanying light, heat, sound, electromagnetic fields, etc.). While shown on the outside of the welding helmet 104 in the example of FIG. 1, in some examples, one or more of the helmet UI devices 114 and/or helmet sensors 105 may be positioned within the welding helmet 102. In some examples, the helmet UI devices 114 and/or helmet sensors 105 may be electrical communication with the helmet circuitry 116.

In some examples, the helmet circuitry 116 may include helmet processing circuitry, helmet memory circuitry, helmet UI circuitry, and/or helmet communication circuitry. In some examples, the helmet UI circuitry may drive the helmet UI devices 114. In some examples, the welding helmet 104 may communicate with one or more external devices via one or more signals sent or received by the helmet communication circuitry. While shown as a helmet in the example of FIG. 1, in some examples, the welding helmet 104 may alternatively, or additionally, comprise welding safety glasses.

In the example of FIG. 1, the welding-type tool 102 is shown applying a welding arc 118 to a joint 120 between two workpieces 122 (e.g., to weld the workpieces 122 together at the joint 120). As shown, the welding-type tool 102 is connected to a welding cable 124 that leads to, and puts the welding-type tool 102 in electrical communication with, the welding-type equipment 106. In some examples, welding-type power (and/or consumables) for the welding arc 118 may be provided to the welding-type tool 102, by the welding equipment 106, via the welding cable 124. In some examples, the welding-type tool 102 may transmit one or more signals to the welding-type equipment 106 when activated (e.g., via the welding cable 124), and the welding-type equipment 106 may provide the welding-type power (and/or consumables) for the arc 118 in response.

In the example of FIG. 1, the welding-type equipment 106 comprises a welding-type power supply 126, wire feeder 128, and gas supply 130. In some examples, the wire feeder 128 may be configured to feed wire to the welding-type tool 102 (e.g., via welding cable 124). In some examples, the gas supply 130 may be configured to route shielding gas to the welding-type tool 102 (e.g., via welding cable 124). In some examples, the power supply 126 may be configured to route welding-type power to the welding-type tool 102 (e.g., via welding cable 124).

In the example of FIG. 1, the power supply 126 includes power communication circuitry 132, power control circuitry 134, and power conversion circuitry 136 interconnected with one another. In some examples, the power supply 126 may communicate with one or more external devices via one or more signals sent or received by the power communication circuitry 132. In some examples, the power conversion circuitry 136 may be configured to receive input power (e.g., from a generator, a battery, mains power, etc.) and convert the input power to welding-type output power, such as might be suitable for use by the welding-type tool 102 for welding-type operations. In some examples, the power control circuitry 134 may be configured to control operation of the power communication circuitry 132 power conversion circuitry 136, wire feeder 128, and/or gas supply 130 (e.g. via one or more control signals) in accordance with one or more welding parameters.

In the example of FIG. 1, the welding-type equipment 106 further includes an operator interface 138. In some examples, the operator interface 138 may comprise one or more display screens, touch screens, knobs, buttons, levers, switches, microphones, speakers, lights, and/or other mechanisms through which an operator 110 may provide input to, and/or receive output from, the welding-type equipment. For example, an operator 110 may use the operator interface 138 to input one or more welding parameters (e.g., target voltage, current, wire feed speed, wire/filler type, wire/filler diameter, gas type, gas flow rate, welding-type process, material type of workpiece 122, position of welding-type process, etc.). As another example, the operator 110 may use the operator interface 138 to view and/or otherwise understand the current welding parameters of the welding-type equipment 106.

While shown as part of the power supply 126 in FIG. 1, in some examples, the operator interface 138, power control circuitry 134, and/or power communication circuitry 132 (and/or some other control/communication circuitry) may be part of the wire feeder 128 and/or gas supply 130. In some examples, the welding-type equipment 106 may be omitted entirely, or may be mock and/or simulated welding-type equipment 106, such as may be used for training, simulated, and/or mock welding-type operations. While not shown for the sake of simplicity, in some examples, the welding-type equipment 106 may also be connected to, and/or provide power to (e.g., via a cable and/or clamp), a welding bench 140, and/or the workpiece(s) 122 supported by the welding bench 140.

In the example of FIG. 1, the welding-type equipment 106 is further shown connected to a computing system 108 having a computing device 142 and several computing user interface (UI) devices 144. In the example of FIG. 1, the computing UI devices 144 include a display screen 146, a keyboard 148, a mouse 150, a stack light 152 with a variety of different (e.g., color, shape, size, etc.) lights that may be illuminated in various ways (e.g., based on one or more received signals), and a vibration device 154 that may provide vibration feedback in various ways/patterns (e.g., based on one or more received signals). The vibration device 154 may be coupled to, for example, the welding torch 102, the welding helmet 104, the operator's clothing or other equipment, and/or any other location where the operator can feel the feedback from the vibration device 154.

In some examples, the computing UI devices 144 may be in (e.g., wired and/or wireless) communication with the computing device 142. In some examples, the display screen 146 may be a touch screen. In some examples, the display screen 146 may include one or more speakers and/or microphones.

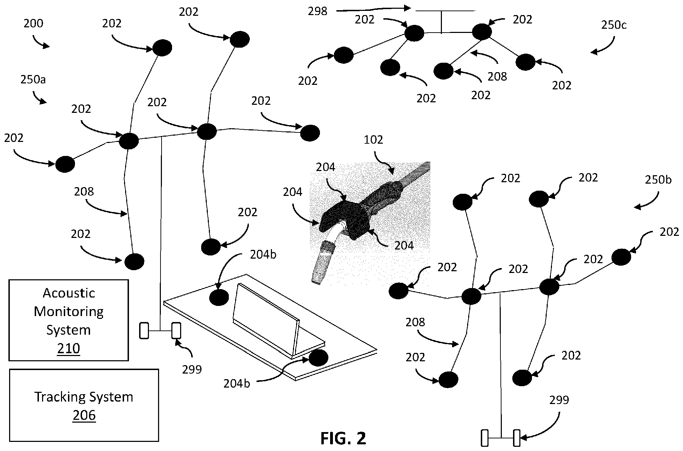

While shown as a desktop computer in the example of FIG. 1, in some examples, the computing device 142 may instead be some other appropriate computational apparatus, such as, for example, a laptop computer, a tablet computer, smart phone, other mobile device, and/or a web server. Though shown as being physically connected to the welding-type equipment 106 via a wire cable, in some examples, the computing device 142 may be in wireless communication with the welding-type equipment 106 (and/or welding helmet 104). While shown as a separate and distinct entity in the example of FIG. 1, in some examples, the computing system 108 may be implemented via the welding-type equipment 106, welding helmet 104, and/or a tracking system 206 (discussed below with respect to FIG. 2).

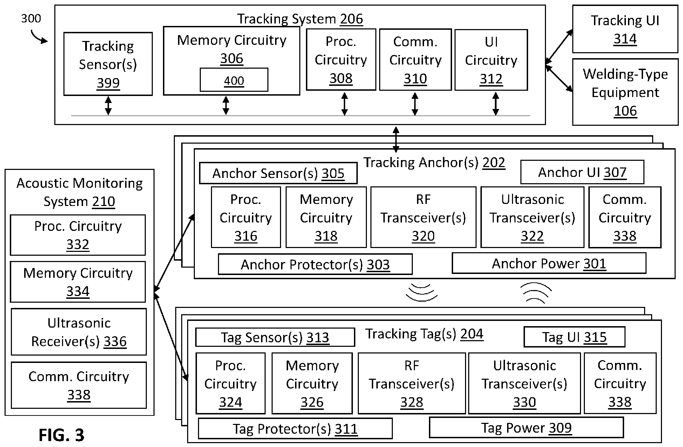

In the example of FIG. 1, tracking anchors 202 are shown around the welding environment, while tracking tags 204 are shown as being attached to some objects (e.g., the welding-type tool 102, welding helmet 104, welding-type equipment 106, workpiece 122, etc.) and/or people (e.g., operators 110). As described in more detail below, the positions/locations and/or orientations of the objects and/or people of the example welding-type system 100 of FIG. 1 may be tracked by a tracking system 206 of a welding technique monitoring system 300 (see, e.g., FIG. 3) using the tracking anchors 202 and/or tracking tags 204. In some examples, the tracking system 206 and/or welding technique monitoring system 300 may track the objects and/or people (e.g., in a welding environment) for the purpose of training, guiding, and/or assessing operators 110 during live and/or simulated welding-type operations.

In some examples, the tracking system 206 and/or welding technique monitoring system 300 may use arrays 250 of tracking anchors 202, arranged in a fixed configuration, to track the three-dimensional (3D) location and/or orientation of (e.g., moving) objects and/or people (see, e.g., FIG. 2). In some examples, the tracking system 206 may track the objects and/or people by tracking tags 204 that are attached to, and/or positioned in/on, the objects and/or people. In some examples, the tracking system 206 may track the tracking tags 204 by analyzing communications between the tracking anchor(s) 202 and tracking tag(s) 204.

In some examples, the tracking anchors 202 and/or tracking tags 204 may be considered part of (and/or encompassing) an indoor positioning system (IPS), such as, for example, an IPS sold by ZeroKey as a spatial intelligence platform. In some examples, the tracking anchors 202 and/or tracking tags 204 may include one or more power sources (wired power source or battery), processors, memories, communication means (Bluetooth, WiFi, Ethernet, etc.), ultrasonic speakers, ultrasonic microphones, RF emitters, RF antennas, accelerometers, gyroscopes, temperature sensors, haptic vibration transducers, switches, LEDs, user interfaces, and other supporting circuitry.

FIG. 2 illustrates an example arrangement 200 of tracking anchors 202 and tracking tags 204. The tracking anchors 202 are shown oriented in different directions to maximize the range of angles for tracking the tracking tags 204. The tracking tags 204 are shown attached to an example object (e.g., the welding torch 102 of FIG. 1).

In the example of FIG. 2, the arrangement 200 further includes a tracking system 206 in communication with the tracking anchors 202 for receiving location data, calibrating/controlling/configuring the tracking anchors 202, and/or determining welding technique parameter values, quality scores, performance scores, and/or other welding-related data based on tracking information and/or any other location-related activities. The example arrangement 200 additionally includes an acoustic monitoring system 210 that monitors the area proximate the tracking anchors 202 and/or the tracking tags 204 for excess or interfering levels of ultrasonic noise and provides feedback to enable the tracking anchors 202 and/or the tracking tags 204 to avoid frequencies at which excess or interfering levels of noise are present.

In the example of FIG. 2, three arrays 250 of tracking anchors 202 are shown. In some examples, multiple arrays 250 of fixed tracking anchors 202 may be used to enlarge the volume for tracking. As shown, each array 250 includes plurality of tracking anchors 202 rigidly attached to each other via structural supports.

In the example of FIG. 2, arrays 250a and 250b are shown mounted on wheels 299 and/or casters for easy transport. In this way, the arrays 250a and 250b can each be moved around easily to ensure proper tracking of the welding activity. Array 250c is shown fixedly mounted to the ceiling 298. While the array 250c is shown attached to a ceiling 298, in some examples, the array 250c (and/or other arrays 250) may instead be attached to different stationary structures within the environment, such as, for example, the welding bench 140, walls, floors, beams, pillars, etc. In some examples, each array 250 of anchors 202 may share a common power source and/or a communication hub.

In some examples, the tracking system 206 may be pre-calibrated with the positions of each anchor 202 in each array 250 so that the precise relative 3D position of each anchor 202 and/or each array 250 is known by the tracking system 206 (e.g., absolutely and/or with respect to other anchors 202, other arrays 250, particular tracking tags 204, a workpiece 122, and/or other reference points/frames). In some examples, the portable arrays 250a and 250b may be calibrated such that they may be moved as a single structure without having to recalibrate the relative spatial arrangement of the anchors 202 every time they are moved around. In some examples, the tracking system 206 may periodically, or in response to movement and/or a request, determine (and/or re-determine/recalibrate) the positions of the tracking anchors 202 and/or arrays 250 with respect to one or more reference locations. In some examples, an array 250 of anchors 202 may be reset and/or recalibrated with respect to one or more reference points to allow for tracking of objects with respect to another object of interest (e.g., a workpiece 122, a welding table/bench 140, a welding fixture, etc.).

In the example of FIG. 2, the welding-type tool 102 has three tracking tags 204 attached around a neck of the tool 102 in a fixed rigid configuration. In some examples, tracking tags 204 may instead be mounted to the (e.g., rear portion of the) handle of the tool 102 (see, e.g., FIG. 1). Tracking tags 204 may also be mounted to a flange extending off the handle to reduce the likelihood of being blocked by the hands and/or gloves of the operator 110.

In some examples, multiple tags 204 may be mounted to the tool 102 to maximize the likelihood of being tracked by the surrounding anchors 202. These tags 204 may also be configured as a rigid body. Tracking tags 204 may be mounted and/or configured at different angles and/or different positions on the tool 102 to further maximize the likelihood of being tracked by the surrounding anchors 202. The tags 204 may be powered by wires embedded into the welding cable 124 or handle, battery-powered, or powered by a separate cable.

While shown as having three tracking tags 204 in the example of FIG. 2, in some examples, the tool 102 (or other object/person) may instead have one, two, four, five, six, and/or more tracking tags 204 attached. In some examples, the tracking tag(s) 204 are attached in a predetermined (e.g., stored in memory) position and orientation with respect to the welding-type tool 102 (or other object/person).

After the tracking tags 204 are rigidly attached to the welding tool 102, their position/orientation relative to each other and/or relative to the tip of the tool 102 are calibrated. Calibration allows the position/orientation of the tip of the welding tool 102 to be calculated based on the tracked position/orientation of the tracking tags 204.

Though shown as being attached to a tool 102 in the example of FIG. 2, in some examples, the tags 204 may be attached to a different object and/or person. For example, tracking tags 204 may be placed on the glove or wristband of the weld operator 110 to track the user's hand. Tracking tags 204 may be attached to objects and/or people via straps, brackets, adhesive, fasteners, or other means.

A separate calibration procedure may be used to determine the position/orientation of the tip of the welding tool 102 relative to the tracking tags 204 on the glove. The location and/or orientation of the workpiece 122 may also be calibrated by, for example, touching the workpiece 122 and/or joint 120 using a tracking tag 204 (e.g., a tracking tag 204 dedicated for marking the workpiece 122), the welding tool 102, or another dedicated calibration device, to determine the position/orientation of the workpiece relative to the tracking anchors 202.

**In** an example tracking scheme, each interrogating anchor 202 emits an RF trigger signal encoded with information on the source (i.e. an anchor ID number). The RF trigger signal may be received by a tracking tag 204. The tracking tag 204, in response, emits an ultrasonic signal. Alternatively, or additionally, the tracking anchor 202 may transmit the ultrasonic response signal(s) at approximately the same time as (or immediately after) transmitting the RF trigger signal.

One triggering RF signal from one of the tracking anchors 202 may provoke multiple response signals in the presence of multiple tracking tags 204. The response signal may include data such as an identifier of the responding/receiving tracking tag 204 and/or an identifier of the tracking anchor 202 that generated the trigger signal (e.g., to which the response signal is responding). The interrogating anchor 202 (and/or a tag 204) receives the responding ultrasonic signal, and the total time delay between the sending and receiving of the signals is determined (e.g., by the anchor 202, the tag 204, and/or the tracking system 206).

Since the RF signal travels at the speed of light and the ultrasonic signal travels at the speed of sound in ambient air (which is significantly slower than light speed), the time delay is almost entirely dependent on the distance between the anchor 202 and tracking tag 204. As such, the distance between the tracking anchor 202 and the tracking tag 204 can be calculated based on the time delay between the sending and receiving of the signals (e.g., the time between transmitting/receiving the triggering signal and receiving the response signal), and the speed of sound in ambient air. By determining distances between the tracking tag 204 and three or more tracking anchors 202 having predetermined positions, a tracking system 206 can measure the three-dimensional position of the tracking tag 204.

In another example tracking scheme, an interrogating anchor 202 emits an ultrasonic trigger signal encoded with information on the source (i.e. an anchor ID number), as well as the time the signal was sent. The tracking tag 204 receives the signal, and records the time the signal was received. The time delay between transmission and reception and the speed of sound in ambient air may be used to determine the distance(s) between anchor(s) 202 and tag(s) 204.

In some examples, the ultrasonic signals are emitted from the tracking anchor 202 and/or tracking tag 204 with a cone angle of about 120 degrees. In cases in which the tracking anchor 202 must be in line-of-sight of the emission cone of the tag 204 to receive the ultrasonic signal, the array of tracking anchors 202 is preferably positioned to ensure that three or more of them have line-of-sight to each tracking tag 204 within the expected range of motion of the tracking tags 204, while also accounting for possible obstructions to line-of-sight such as the body of the operator 110 or workpiece 122 being welded.

In some examples, a temperature sensor may also be used to compensate for variations in the speed of sound related to ambient temperature. The temperature sensor may be integrated into the tracking anchor 202 and/or tracking tag 202, or may be located elsewhere (e.g., as part of the tracking system 206) to ensure an accurate measurement of the ambient air temperature.

Using three or more anchors 202, each determining the distance to a single tracking tag 204, the three-dimensional position of the tracking tag 204 can be determined relative to the array of anchors 202 via triangulation and/or other algorithms. With multiple tracking tags 204 attached to a single object, the position and/or orientation of the object can be determined. Three or more tracking tags 204, spatially separated in a fixed rigid configuration, can be defined as a rigid body and used for six-degree-of-freedom (6DOF) tracking (see, e.g., the tags 204 attached to the welding-type tool 102 in FIGS. 1 & 2). Using an accelerometer internal to the tracking tags 204 to measure the angle of each tracking tag 204 relative to gravity, some examples achieve 6DOF tracking using only two spatially separated tracking tags 204 rigidly connected to each other and to the object. By using an accelerometer and/or gyroscope internal to a tracking tag 204 to measure the angular orientation (e.g., yaw, pitch, and roll) of the tracking tag, some examples achieve 6DOF tracking using only a single tracking tag 204.

Thus, by determining distances between the tracking tag(s) 204 on the tool 102 and the anchor(s) 202, positions of the tracking tags 204 may be determined (e.g., using known/calibrated locations of the plurality of tracking anchors 202). And using the positions of each of the tracking tags 204 attached to the tool 102 (e.g., relative to the tracking anchor(s) 202 and/or a reference point/frame), the position and orientation of the tool 102 can be determined (e.g., using a stored rigid body model representing the predetermined positions and orientations of the tracking tag(s) 204 with respect to the welding tool 102 and/or a triangulation technique).

In some examples, the tracking system 206 determines positions of the plurality of tracking anchors 202 by a reverse triangulation, such as by determining the positions of two or more reference tracking tags 204b using three or more of the tracking anchors 202. For example, sets of the tracking anchors 202 may be arranged in a predetermined spatial relationship (e.g., on a rigid structure 208). By using three or more of the tracking anchors 202 in the predetermined spatial relationship (e.g., on the rigid structure 208) to determine the locations of two or more reference tracking tags 204b, the tracking system 206 can determine the locations of each of the tracking anchors 202 in the same predetermined spatial relationship (e.g., on the same rigid structure 208) with respect to the reference tags 204b and/or with respect to a reference frame defined using the reference tags 204b.

With the welding-type tool 102 tracked and the workpiece 122 calibrated, the tracking system 206 can determine the position and/or orientation of the welding tool tip relative to the workpiece 122 and/or joint 120, and calculate welding technique parameters (e.g., work angle, travel angle, contact tip to work distance, aim, travel speed, travel direction, push/pull, weaving parameters, etc.). Example techniques for calculating and displaying welding technique parameters are described in U.S. Patent No. 10,427,239, to William Becker. In some examples, performance scores, quality scores, and/or other information may also be determined.

In some examples, the system 300 detects when welding occurs to initiate recording of data associated with the welding technique, and/or feedback with respect thereto. For simulated welding sessions, a user input (e.g., via a trigger of the tool 102 or a user interface) may be provided to determine the beginning and end of a simulated weld.

In some examples, the tracking system 206 may have a tracking user interface (UI) 314 (e.g., comprising displays, speakers, haptics, etc.) to provide (e.g., technique, score, quality, etc.) feedback and information to the user (see, e.g., FIG. 3). In some examples, the tracking UI 314 may additionally have one or more input devise (e.g., buttons, levers, touch screens, microphones, etc.) to receive input from the user. In some examples, each tracking tag 204 may additionally have a tag UI 315 (e.g., comprising displays, speakers, haptics, etc.) to provide (e.g., technique) feedback and information to the user. In some examples, a welding helmet 104 and/or glasses (e.g., safety glasses) may contain a display screen 112 capable of overlaying information related to welding technique (visual guides, numerical values, etc.).

In some examples, one or more tracking tags 204 may also be attached to the welding helmet 104 and/or glasses and used to facilitate tracking relative to the workpiece 122, welding tool 102, tracking anchors 202, etc. In some examples, tracking of the helmet 104 and/or glasses would allow the information displayed to be rendered to spatially correlate with the objects being viewed through the helmet or glasses (i.e. travel speed guide overlaid on the welding joint 120, angle guides overlaid adjacent to the welding tool 102, etc.). Example techniques for displaying welding information are described in U.S. Patent No. 10,380,911, to Hsu et al., U.S. Patent No. 10,448,692, to Hsu et al., U.S. Patent No. 11,322,041, to Sommers et al., and U.S. Patent No. 10,406,638, to Albrecht et al.

In some examples, the tracking anchors 202 and/or tracking tags 204 may have a replaceable protective cover to protect from welding spatter, dust, debris, and/or other particulate in the air or environment. The cover may be a thin plastic cover, or a very thin film-like sheet to minimize the attenuation of the ultrasonic signal. Additionally or alternatively, an air knife may be used to protect the tracking anchors 202 and tracking tags by blowing ambient air or other gas across the surface of the device to protect the device from particulate. In addition, the tracking anchors 202 and/or tracking tags 204 may include means for cooling (i.e. blowing air, conducting flowing water) to prevent overheating in the welding environment.

Example implementations of the tracking anchors 202 and/or tracking tags 204, and/or calculation of the locations of tags 204, are described in International Patent Application No. PCT/CA2021/050338, filed March 12, 2021, by Lowe et al., U.S. Patent No. 10,051,599 to Lowe et al., U.S. Patent No. 10,627,479 to Lowe et al., and/or "The Cricket Location-Support System" by Nissanka B. Priyantha et al., MIT Laboratory for Computer Science, 6th ACM International Conference on Mobile Computing and Networking (ACM MOBICOM), Boston, MA, August 2000 (also available at http://nms.lcs.mit.edu/papers/cricket.pdf).

Live welding naturally emits ultrasonic sound and RF radiation, with different spectrums being emitted by different welding processes (MIG, TIG, Stick, Pulsed MIG, Pulsed TIG, TIG with HF start) and/or welding settings (voltage, amperage, inductance, pulse waveform/frequency, wire feed speed, gas composition/flow, wire type, material type, etc.). Because example tracking systems 206 and/or monitoring systems 300 described herein rely on the accurate detection of ultrasonic and RF signals, there is a possibility of interference to tracking due to welding.

To maintain tracking accuracy in the presence of potential interference, example arrangements 200 and/or systems 300 include an acoustic monitoring system 210 comprising broadband ultrasonic receivers 336 (e.g., comprising antennas and/or associated circuitry) and/or RF circuitry 338 (e.g., comprising RF antennas). In some examples, the acoustic monitoring system 210 may be placed in proximity to a welding environment, the tracking anchors 202, and/or the tracking tags 204 to automatically detect the natural welding emission bandwidths/spectrums.

In some examples, the tracking system 206, the tracking anchors 202, and/or the tracking tags 204 are controlled to avoid electromagnetic and/or acoustic interference generated by a live welding process, to permit effective use of the location and orientation tracking during live (e.g., arc-on) welding. For example, the tracking anchors 202 and/or tracking tags 204 may be configured to transmit the response signals using ultrasonic frequencies selected to avoid interference from welding-based noise. The tracking system 206, the tracking anchors 202, and/or the tracking tags 204 may be in communication with the acoustic monitoring system 210 to enable the tracking anchors 202 and/or the tracking tags 204 to avoid frequencies at which excess or interfering levels of noise are present.

The signals used by the anchors 202, tags 204, tracking system 206, and/or monitoring system 300 may be automatically selected or customized to avoid interference with the detected emissions (e.g., using a spectrum, channel, or frequency with the least amount of detected emissions). For example, the acoustic monitoring system 210 may transmit feedback representative of preferred ultrasonic channels and/or frequencies and/or non-preferred ultrasonic channels and/or frequencies. The tracking anchors 202 may then encode the preferred and/or non-preferred channels and/or frequencies in the triggering signals. The tracking system 206, tracking tags 204, and/or tracking anchors 202 use the channel information to select channels and/or frequencies for transmitting the response signals, thereby avoiding interference. Additionally or alternatively, the tracking tags 204 may receive the feedback from the acoustic monitoring system 210 and select an ultrasonic channel to transmit the response signals based on the feedback.

In some examples, the tracking system 206 may determine the proper ultrasonic and RF signal frequencies to use based on the welding parameters/process being used. The welding parameters/process may be known via user input or automatically detected (i.e. via communication with the welding equipment 106). The welding parameters and/or welding process may be communicated to the tracking system 206, the tracking anchors 202, and/or the tracking tags 204 from the welding equipment 106 (e.g., the power supply 126, the wire feeder 128, etc.).

In some examples, the tracking tags 204 select an ultrasonic channel to transmit the response signals based on a (e.g., stored) table having ultrasonic frequency data associated with welding parameters and/or welding processes used to perform the welding operation. In other examples, the tracking anchors 202 determine, based on a table having ultrasonic frequency data associated with welding parameters and/or welding processes used to perform the welding operation, preferred ultrasonic channels and/or frequencies and/or non-preferred ultrasonic channels and/or frequencies. The emissions spectrums from common welding processes may be determined and/or input into the system 300 (e.g., user customization, embedded within the software, etc.). The tracking anchors 202 may then transmit the triggering signal having data representative of the preferred ultrasonic channels and/or frequencies and/or non-preferred ultrasonic channels and/or frequencies, and the tracking tags 204 may select the ultrasonic channel to transmit the response signals based on the data in the triggering signals. As another alternative, the tracking system 206 may automatically hop to different frequencies if interference is detected or tracking is lost.

FIG. 3 is a block diagram showing an example welding technique monitoring system 300. As shown, the welding technique monitoring system 300 includes the tracking system 206, multiple tracking anchors 202, multiple tracking tags 204, the acoustic monitoring system 210, a tracking UI 314, and the welding-type equipment 106. While shown as a separate processing system in the example of FIG. 3, in some examples, some or all of the tracking system 206 and/or acoustic monitoring system 210 may be implemented by the tracking anchor(s) 202, the tracking tag(s) 204, the welding helmet 104, the computing device 142, and/or the welding-type equipment 106.

In the example of FIG. 3, the tracking system 206 includes tracking memory circuitry 306, tracking processing circuitry 308, tracking communication circuitry 310, tracking UI circuitry 312, and tracking sensors 399 interconnected with one another via a common electrical bus. In some examples, the tracking sensors 399 may include one or more temperature sensors. In the example of FIG. 3, the welding technique monitoring system 300 also includes a tracking UI 314 in communication with tracking system 206. In some examples, the tracking UI 314 may be implemented by the computing UI devices 144, helmet UI devices 114, and/or operator interface 138 of the welding-type equipment 106.

In the example of FIG. 3, the example tracking anchors 202 include anchor processing circuitry 316, anchor memory circuitry 318, an anchor RF transceiver 320, and an anchor ultrasonic transceiver 322. The example anchor processing circuitry 316 executes machine readable instructions, which may be stored on the anchor memory circuitry 318. The anchor RF transceiver 320 transmits an RF trigger signal, which may include data to identify the transmitting tracking anchor 202 and/or have a specific frequency to accommodate noise present in a welding environment. The anchor ultrasonic transceiver 322 is configured to transmit, receive, and/or decode ultrasonic signals (e.g., from one or more tracking tags 204).

In some examples, the anchor processing circuitry 316 processes the data received via the anchor ultrasonic transceiver 322, determines a time between transmission of a trigger signal and receipt of a responsive response signal, and determines a distance to the tracking tag 204 from which the response signal is received. The anchor processing circuitry 316 and/or the anchor ultrasonic transceiver 322 may discard or ignore ultrasonic signals which do not correspond to trigger signals sent by that tracking anchor 202.

In the example of FIG. 3, the tracking anchor 202 further includes an anchor power source 301, one or more anchor protectors 303, one or more anchor sensors 305, and an anchor UI 307. In some examples, the anchor power source 301 may be a dedicated power supply, a power bus connected to an array 250 of tracking anchors 202 (e.g., anchors connected to a same structure 208), and/or some other source. In some examples, the anchor protectors 303 may include one or more replaceable protective covers, air knives, and/or cooling devices, as discussed above. In some examples, the anchor sensors 305 may include accelerometers, gyroscopes, magnetometers, and/or temperature sensors, as discussed above. In some examples, the anchor UI 307 may include one or more input and/or output devices, such as, for example, (e.g., touch screen) displays, microphones, speakers, haptics, buttons, knobs, slides, levers, etc.

In the example of FIG. 3, each tracking tag 204 includes tag processing circuitry 324, tag memory circuitry 326, a tag RF transceiver 328, and a tag ultrasonic transmitter 330. The example tag processing circuitry 324 executes machine readable instructions, which may be stored on the tag memory circuitry 326. The tag RF transceiver 328 receives RF trigger signals, which may include data to identify the transmitting tracking anchor 202. In response to the trigger signal, the tag processing circuitry 324 controls the tag ultrasonic transmitter 330 to transmit an ultrasonic signal including the identifier of the tracking anchor (or identifier of the trigger message) to which the ultrasonic response signal is responding, and an identifier of the tracking tag 204 which is responding.

In the example of FIG. 3, each tag 204 further includes a tag power source 309, one or more tag protectors 311, one or more tag sensors 313, and a tag UI 315. In some examples, the tag power source 309 may be a dedicated power supply and/or a battery, and/or may be a connection to an external power supply of an object to which the tag 204 is attached (e.g., welding-type circuit of welding-type equipment 106, tool 102, etc.). In some examples, the tag protectors 311 may include one or more replaceable protective covers, air knives, and/or cooling devices, as discussed above. In some examples, the tag sensors 313 may include accelerometers, gyroscopes, magnetometers, and/or temperature sensors, as discussed above. In some examples, the tag UI 315 may include one or more input and/or output devices, such as, for example, (e.g., touch screen) displays, microphones, speakers, haptics, buttons, knobs, slides, levers, etc.

In the example of FIG. 3, the system 300 further includes the acoustic monitoring system 210. As shown, acoustic monitoring system 210 includes acoustic processing circuitry 332, acoustic memory circuitry 334, and an acoustic ultrasonic receiver 336 (or transceiver). The example acoustic processing circuitry 332 measures and analyzes the frequency distribution of ultrasonic noise in the environment proximate the tracking anchors 202 and the tracking tags 204, and/or determines one or more preferred frequencies and/or channels, and/or one or more non-preferred frequencies and/or channels. The acoustic processing circuitry 324 may use these preferred frequencies and/or channels, and/or one or more non-preferred frequencies and/or channels to select an ultrasonic channel or frequency for transmitting response signals.

In the example of FIG. 3, the example tracking anchors 202, tracking tags 204, and/or acoustic monitoring system 210 further include respective communication circuitry 338 to enable wired and/or wireless communications between the tracking anchors 202, the tracking tags 204, the acoustic monitoring system 210, the tracking system 206, and/or the welding-type equipment 106.

In some examples, the tracking communication circuitry 310 and/or communication circuitry 338 may include one or more wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the tracking communication circuitry 310 and/or communication circuitry 328 may be configured to facilitate communication via one or more wired media and/or protocols (e.g., Ethernet cable(s), universal serial bus cable(s), etc.) and/or wireless mediums and/or protocols (e.g., cellular communication, general packet radio service (GPRS), near field communication (NFC), ultra high frequency radio waves (commonly known as Bluetooth), IEEE 802.11x, Zigbee, HART, LTE, Z-Wave, WirelessHD, WiGig, etc.). In some examples, the tracking communication circuitry 310 and/or communication circuitry 328 may be coupled to one or more antennas to facilitate wireless communication.

In some examples, the tracking communication circuitry 310 and/or communication circuitry 328 may be configured to facilitate internal and/or external communications. In some examples, the tracking communication circuitry 310 and/or communication circuitry 328 may receive one or more signals (e.g., from each other and/or the welding-type equipment 106) decode the signal(s), and provide the decoded data to other components (e.g., directly, via a communications bus). As another example, the tracking communication circuitry 310 and/or communication circuitry 328 may receive one or more signals from the communications bus (e.g., representative of one or more inputs received via the tracking UI circuitry 312) encode the signal(s), and transmit the encoded signal(s) to an external device.

In some examples, the tracking processing circuitry 308, anchor processing circuitry 316, tag processing circuitry 324, and/or acoustic processing circuitry 332 include one or more processors, controllers, and/or graphical processing units (GPUs). In some examples, the tracking processing circuitry 308, anchor processing circuitry 316, tag processing circuitry 324, and/or acoustic processing circuitry 332 may include counter circuitry and/or clock circuitry. In some examples, the tracking processing circuitry 308, anchor processing circuitry 316, tag processing circuitry 324, and/or acoustic processing circuitry 332 may be configured to execute machine readable instructions stored in corresponding memory circuitry 306, 318, 326, 334.

While not shown in the example of FIG. 3, in some examples, the tracking memory circuitry 306 may also include (and/or store) machine readable instructions comprising counter and/or clock programs. In some examples, the tracking memory circuitry 306 may also include (and/or store) values for one or more determined, target, present, and/or past parameters, such as, for example, welding parameters (e.g., voltage, current, wire feed speed, gas flow rate, etc.), welding technique parameters (e.g., work angle, travel angle, travel speed, travel direction, etc.), weave parameters (e.g., frequency, weave width, dwell time, etc.), sensor parameters (e.g., sensor orientation reference frame, tool orientation vector, etc.), joint parameters (e.g., joint orientation vector, base plate perpendicular vector, base plate surface vector, etc.), and/or operation parameters (e.g., job type/identifier(s), operator identifier(s), weld cell identifier(s), project identifier(s), welding procedure specification (WPS) information, work order information, equipment type/identifier(s), weld number information, etc.). In some examples, one or more parameters may be associated with timestamp information, one or more other parameters, and/or other information.

In the example of FIG. 3, the tracking memory circuitry 306 is also shown as including (and/or storing) a monitoring process 400. In some examples, the monitoring process 400 may comprise machine readable instructions configured for execution by the tracking processing circuitry 308. In some examples, the monitoring process 400 may be implemented via discrete circuitry (e.g., of the tracking processing circuitry 308) rather than, or in addition to, being part of (and/or stored in) the tracking memory circuitry 306.

While some of the disclosure below discusses the monitoring process 400 performing certain actions, this should be understood as a shorthand for one or more components of the monitoring system 300 performing the action(s) as part of the monitoring process 400. In some examples, the monitoring process 400 may determine a position and/or orientation of one or more objects as discussed above, identify technique parameters, scores, and/or other information based on the position(s)/orientation(s), and/or provide feedback related thereto.

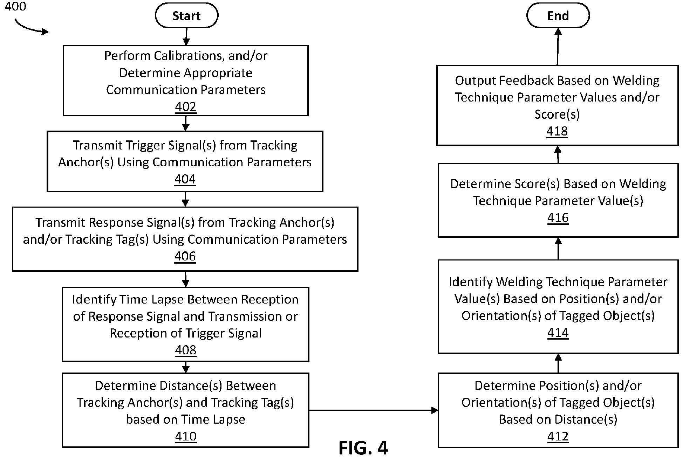

FIG. 4 is a flowchart illustrating an example operation of the monitoring process 400. As shown, the monitoring process 400 begins at block 402, where the monitoring process 400 performs one or more calibrations, and/or determines appropriate communication parameters (e.g., frequency, spectrum, etc.), as discussed above. Next, at block 404, one or more trigger signals are transmitted from one or more tracking anchors 202 (and/or tracking tags 204) using the appropriate communication parameters, as discussed above. At block 406, one or more response signals are transmitted from one or more tracking anchors 202 and/or tracking tags 204 using the appropriate communication parameters, as discussed above.

At block 408, the monitoring process 400 identifies a time difference between reception of the response signal and transmission/reception of the trigger signal, as discussed above. At block 410, the monitoring process 400 determines one or more distances between the tracking anchor(s) 202 and tracking tag(s) 204 based on the time difference(s), as discussed above. Next, at block 412, the monitoring process 400 determines the position(s) and/or orientation(s) of the tagged/tracked object(s) is made based on the time difference(s), as discussed above.

In the example of FIG. 4, the monitoring process 400 determines values corresponding to one or more welding technique parameters based on the position(s) and/or orientation(s) of the tagged/tracked object(s) at block 414, as discussed above. At block 416, the monitoring process 400 determines one or more scores and/or other information based on the welding technique parameter values, as discussed above. Finally, at block 418, the monitoring process 400 provides feedback relating to the welding technique parameter values, scores, and/or other information of the monitoring process 400, as discussed above.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present invention as defined in

## Claims

1. A weld tracking system (206), comprising:
a plurality of tracking anchors (202), and
a welding device (102, 104);
**characterized in that** each of the tracking anchors (202) is configured to:
transmit a triggering signal, and
transmit a response signal, or receive the response signal from a tracking tag (204), wherein the triggering signal is an electromagnetic signal or an ultrasonic signal, and the response signal is an acoustic signal;
**in that** the welding device (102, 104) having the tracking tag (204) attached to the welding device, the tracking tag configured to receive the triggering signal and receive the response signal, or receive the triggering signal and transmit the response signal in response to receiving the triggering signal; and
**in that** the weld tracking system (206) comprises a processing system configured to:
determine distances between each of the tracking anchors (202) and the tracking tag based on a time between the response signal being received and the triggering signal being sent or received, and
determine a location of the welding device based on predetermined locations of the plurality of tracking anchors, and based on determined distances between the tracking tag on the welding device and corresponding ones of the plurality of tracking anchors.

2. The weld tracking system (206) as defined in claim 1, wherein the processing system is configured to determine positions of the plurality of tracking anchors (202) based on a predetermined spatial relationship between the plurality of tracking anchors and based on a calibration process to determine positions of two or more of the plurality of tracking anchors in the predetermined spatial relationship with respect to a reference location.

3. The weld tracking system (206) as defined in claim 1, wherein the welding device is at least one of a welding torch (102), a welding helmet (104), safety glasses, or a welding fixture.

4. The weld tracking system (206) as defined in claim 1, wherein the processing system is configured to determine the location of the welding device with respect to the reference location based on the positions of the plurality of tracking anchors (202).

5. The weld tracking system (206) as defined in claim 1, wherein the electromagnetic signal of the the triggering signal is a radio frequency signal.

6. The weld tracking system (206) as defined in claim 1, wherein the welding device has a plurality of tracking tags (204) attached to the welding device, and the processing system is configured to determine the location of the welding device based on measuring the locations of the plurality of tracking tags and optionally
wherein the processing system is configured to determine an orientation of the welding device based on measuring the locations of the plurality of tracking tags on the welding device and based on a rigid body model of the welding device and the plurality of tracking tags on the welding device.

7. The weld tracking system (206) as defined in claim 1, wherein the welding device is a welding torch (102), and the processing system is configured to determine a welding performance based on a plurality of locations of the welding device during a welding operation.

8. The weld tracking system (206) as defined in claim 1, wherein the tracking tag (204) or each of the tracking anchors (202) is configured to transmit the response signal as an ultrasonic signal having a frequency selected to avoid interference from welding-based noise.

9. The weld tracking system (206) as defined in claim 8, further comprising a noise monitor configured to measure ultrasonic frequencies in an environment proximate to the tracking anchors (202) and the tracking tag (204), and configured to transmit feedback representative of at least one of a preferred ultrasonic channel or ultrasonic frequency or a non-preferred ultrasonic channel or ultrasonic frequency.

10. The weld tracking system (206) as defined in claim 9, wherein the plurality of tracking anchors (202) are configured to transmit the triggering signal having data representative of the at least one of a preferred ultrasonic channel or ultrasonic frequency or a non-preferred ultrasonic channel or ultrasonic frequency, and the tracking tag (204) is configured to select an ultrasonic channel to transmit the response signal based on the data in the triggering signal or wherein the tracking tag or each of the tracking anchors is configured to receive the feedback from the noise monitor and select an ultrasonic channel to transmit the response signal based on the feedback.

11. The weld tracking system (206) as defined in claim 8, wherein the tracking tag (204) or each of the tracking anchors (202) is configured to select an ultrasonic channel to transmit the response signal based on a table having ultrasonic frequency data associated with at least one of a welding parameter or a welding process.

12. The weld tracking system (206) as defined in claim 8, wherein the plurality of tracking anchors (202) are configured to:
determine, based on a table having ultrasonic frequency data associated with at least one of a welding parameter or a welding process, at least one of a preferred ultrasonic channel or ultrasonic frequency or a non-preferred ultrasonic channel or ultrasonic frequency; and
transmit the triggering signal having data representative of the at least one of a preferred ultrasonic channel or ultrasonic frequency or a non-preferred ultrasonic channel or ultrasonic frequency, and the tracking tag (204) is configured to select an ultrasonic channel to transmit the response signal based on the data in the triggering signal.

13. The weld tracking system (206) as defined in claim 1, wherein the welding device comprises:
three or more tracking tags (204) spatially separated in a fixed rigid configuration;
two spatially separated tracking tags rigidly connected to each other, each of the tracking tags comprising an accelerometer configured to measure the angle of the tracking tag relative to gravity; or
a single tracking tag having an accelerometer and a gyroscope,
wherein the processing system is configured to determine a six-degree-of-freedom location and orientation of the welding device based on the three or more tracking tags, the two tracking tags, or the one tracking tag.

14. The weld tracking system (206) as defined in claim 1, wherein the plurality of tracking anchors (202) are affixed to one or more rigid structures (208) defining a rigid spatial relationship between the ones of the tracking anchors affixed to the respective rigid structure and optionally wherein the rigid structures are portable.

15. The weld tracking system (206) as defined in claim 1, wherein the processing system is configured to determine, based on the location of the welding device and a rigid body model of the tracking tag (204) and the welding device, at least one of a work angle, a travel angle, a travel direction, a travel speed, or a contact tip to work distance of a welding torch (102) during a live welding operation or a simulated welding operation.

## Patentansprüche

1. Schweißverfolgungssystem (206), aufweisend:
mehrere Verfolgungsanker (202) und
ein Schweißgerät (102, 104);
**dadurch gekennzeichnet, dass** jeder der Verfolgungsanker (202) so eingerichtet ist, dass er:
ein Auslösesignal überträgt und
eine Antwortsignal überträgt oder das Antwortsignal von einem Verfolgungs-Tag (204) empfängt, wobei das Auslösesignal ein elektromagnetisches Signal ist und das Antwortsignal ein akustisches Signal ist;
dadurch, dass bei dem Schweißgerät (102, 104) das Verfolgungs-Tag (204) an dem Schweißgerät befestigt ist, wobei das Verfolgungs-Tag so eingerichtet ist, dass es das Auslösesignal empfängt und das Antwortsignal empfängt oder das Auslösesignal empfängt und das Antwortsignal in Reaktion auf das Empfangen des Auslösesignals überträgt; und
dadurch, dass das Schweißverfolgungssystem (206) ein Verarbeitungssystem aufweist, das so eingerichtet ist, dass es:
Abstände zwischen jedem der Verfolgungsanker (202) und dem Verfolgungs-Tag basierend auf einer Zeit zwischen dem Empfangen des Antwortsignals und dem Senden oder Empfangen des Auslösesignals ermittelt, und
einen Standorts des Schweißgeräts basierend auf vorbestimmten Standorten der mehreren Verfolgungsanker und basierend auf ermittelten Abständen zwischen dem Verfolgungs-Tag an dem Schweißgerät und entsprechenden der mehreren Verfolgungsanker ermittelt.

2. Schweißverfolgungssystem (206) nach Anspruch 1, wobei das Verarbeitungssystem so eingerichtet ist, dass es Positionen der mehreren Verfolgungsanker (202) basierend auf einer vorbestimmten räumlichen Beziehung zwischen den mehreren Verfolgungsankern und basierend auf einem Kalibrierungsprozess ermittelt, um Positionen von zwei oder mehr der mehreren Verfolgungsanker in der vorbestimmten räumlichen Beziehung in Bezug auf einen Referenzstandort zu ermitteln.

3. Schweißverfolgungssystem (206) nach Anspruch 1, wobei das Schweißgerät eines aus einem Schweißbrenner (102), einem Schweißhelm (104), einer Schutzbrille oder einer Schweißvorrichtung ist.

4. Schweißverfolgungssystem (206) nach Anspruch 1, wobei das Verarbeitungssystem so eingerichtet ist, dass es den Standort des Schweißgeräts in Bezug auf den Referenzstandort basierend auf den Positionen der mehreren Verfolgungsanker (202) ermittelt.

5. Schweißverfolgungssystem (206) nach Anspruch 1, wobei das Auslösesignal ein Hochfrequenzsignal ist und/oder wobei das Auslösesignal ein Hochfrequenzsignal ist.

6. Schweißverfolgungssystem (206) nach Anspruch 1, wobei bei dem Schweißgerät mehreren Verfolgungs-Tags (204) an dem Schweißgerät befestigt sind und das Verarbeitungssystem so eingerichtet ist, dass es den Standort des Schweißgeräts basierend auf einem Messen der Standorte der mehreren Verfolgungs-Tags ermittelt, wobei optional
das Verarbeitungssystem so eingerichtet ist, dass es eine Ausrichtung des Schweißgeräts basierend auf dem Messen der Standorte der mehreren Verfolgungs-Tags an dem Schweißgerät und basierend auf einem starren Körpermodell des Schweißgeräts und der mehreren Verfolgungs-Tags an dem Schweißgerät ermittelt.

7. Schweißverfolgungssystem (206) nach Anspruch 1, wobei das Schweißgerät ein Schweißbrenner (102) ist und das Verarbeitungssystem so eingerichtet ist, dass es eine Schweißleistung basierend auf mehreren Standorten an dem Schweißgerät während eines Schweißvorgangs ermittelt.

8. Schweißverfolgungssystem (206) nach Anspruch 1, wobei das Verfolgungs-Tag (204) oder jeder der Verfolgungsanker (202) so eingerichtet ist, dass es/er das Antwortsignal als ein Ultraschallsignal mit einer Frequenz überträgt, die ausgewählt ist, um Interferenz durch schweißbasiertes Rauschen zu vermeiden.

9. Schweißverfolgungssystem (206) nach Anspruch 8, das ferner einen Rauschmonitor aufweist, der so eingerichtet ist, dass er Ultraschallfrequenzen in einer Umgebung in der Nähe der Verfolgungsanker (202) und des Verfolgungs-Tags (204) misst, und der so eingerichtet ist, dass er Feedback überträgt, das mindestens eines aus einem bevorzugten Ultraschallkanal oder einer bevorzugten Ultraschallfrequenz und einem nicht bevorzugten Ultraschallkanal oder einer nicht bevorzugten Ultraschallfrequenz abbildet.

10. Schweißverfolgungssystem (206) nach Anspruch 9, wobei die mehreren Verfolgungsanker (202) so eingerichtet sind, dass sie das Auslösesignal mit Daten übertragen, die das mindestens eine aus einem bevorzugten Ultraschallkanal oder einer bevorzugten Ultraschallfrequenz und einem nicht bevorzugten Ultraschallkanal oder einer nicht bevorzugten Ultraschallfrequenz abbilden, und das Verfolgungs-Tag (204) so eingerichtet ist, dass es basierend auf den Daten in dem Auslösesignal einen Ultraschallkanal auswählt, um das Antwortsignal zu übertragen, oder wobei das Verfolgungs-Tag oder jeder der Verfolgungsanker so eingerichtet sind, dass es/er das Feedback von dem Rauschmonitor empfängt und basierend auf dem Feedback einen Ultraschallkanal auswählt, um das Antwortsignal zu übertragen.

11. Schweißverfolgungssystem (206) nach Anspruch 8, wobei das Verfolgungs-Tag (204) oder jeder der Verfolgungsanker (202) so eingerichtet sind, dass es/er basierend auf einer Tabelle, die Ultraschallfrequenzdaten aufweist, die mindestens einem von einem Schweißparameter oder einem Schweißprozess zugeordnet sind, einen Ultraschallkanal auswählt, um das Antwortsignal zu übertragen.

12. Schweißverfolgungssystem (206) nach Anspruch 8, wobei die mehreren Verfolgungsanker (202) so eingerichtet sind, dass sie:
basierend auf einer Tabelle, die Ultraschallfrequenzdaten aufweist, die mindestens einem von einem Schweißparameter oder einem Schweißprozess zugeordnet sind, mindestens eines aus einem bevorzugten Ultraschallkanal oder einer bevorzugten Ultraschallfrequenz und einem nicht bevorzugten Ultraschallkanal oder einer nicht bevorzugten Ultraschallfrequenz ermitteln; und
das Auslösesignal mit Daten übertragen, die das mindestens eine aus einem bevorzugten Ultraschallkanal oder einer bevorzugten Ultraschallfrequenz und einem nicht bevorzugten Ultraschallkanal oder einer nicht bevorzugten Ultraschallfrequenz abbilden, wobei das Verfolgungs-Tag (204) so eingerichtet ist, dass es basierend auf den Daten in dem Auslösesignal einen Ultraschallkanal auswählt, um das Antwortsignal zu übertragen.

13. Schweißverfolgungssystem (206) nach Anspruch 1, wobei das Schweißgerät Folgendes aufweist:
drei oder mehr Verfolgungs-Tags (204), die in einer festen starren Konfiguration räumlich getrennt sind;
zwei räumlich getrennte, starr miteinander verbundene Verfolgungs-Tags, wobei jedes der Verfolgungs-Tags einen Beschleunigungsmesser aufweist, der so eingerichtet ist, dass er den Winkel des Verfolgungs-Tags in Bezug auf die Schwerkraft misst; oder
ein einzelnes Verfolgungs-Tag, das einen Beschleunigungsmesser und ein Gyroskop aufweist,
wobei das Verarbeitungssystem so eingerichtet ist, dass es basierend auf den drei oder mehr Verfolgungs-Tags, den zwei Verfolgungs-Tags oder dem einen Verfolgungs-Tag einen Standort und eine Ausrichtung des Schweißgeräts mit sechs Freiheitsgraden ermittelt.

14. Schweißverfolgungssystem (206) nach Anspruch 1, wobei die mehreren Verfolgungsanker (202) an einer oder mehreren starren Strukturen (208) befestigt sind, die eine starre räumliche Beziehung zwischen den Verfolgungsankern, die an der jeweiligen starren Struktur befestigt sind, definieren, wobei optional die starren Strukturen tragbar sind.

15. Schweißverfolgungssystem (206) nach Anspruch 1, wobei das Verarbeitungssystem so eingerichtet ist, dass es basierend auf dem Standort des Schweißgeräts und einem starren Körpermodell des Verfolgungs-Tags (204) und des Schweißgeräts mindestens eines aus einem Arbeitswinkel, einem Bewegungswinkel, einer Bewegungsrichtung, einer Bewegungsgeschwindigkeit oder einem Abstand der Kontaktspitze zum Werkstück eines Schweißbrenners (102) während eines tatsächlichen Schweißvorgangs oder eines simulierten Schweißvorgangs ermittelt.

## Revendications

1. Système de suivi d'équipement de soudage (206) comprenant :
une pluralité d'ancrages de suivi (202), et
un dispositif de soudage (102, 104) ;
**caractérisé en ce que** chacun des ancrages de suivi (202) est configuré pour :
transmettre un signal de déclenchement, et
transmettre un signal de réponse, ou recevoir le signal de réponse d'une étiquette de suivi (204), dans lequel le signal de déclenchement est un signal électromagnétique et le signal de réponse est un signal acoustique ;
**en ce que** le dispositif de soudage (102, 104) ayant l'étiquette de suivi (204) fixée au dispositif de soudage, l'étiquette de suivi configurée pour recevoir le signal de déclenchement et recevoir le signal de réponse, ou recevoir le signal de déclenchement et transmettre le signal de réponse en réponse à la réception du signal de déclenchement ; et
**en ce que** le système de suivi de soudure (206) comprend un système de traitement configuré pour :
déterminer des distances entre chacun des ancrages de suivi (202) et l'étiquette de suivi sur la base d'un temps entre le signal de réponse reçu et le signal de déclenchement envoyé ou reçu, et
déterminer un emplacement du dispositif de soudage sur la base d'emplacements prédéterminés de la pluralité d'ancrages de suivi, et sur la base de distances déterminées entre l'étiquette de suivi sur le dispositif de soudage et des ancrages correspondants de la pluralité d'ancrages de suivi.

2. Système de suivi de soudure (206) selon la revendication 1, dans lequel le système de traitement est configuré pour déterminer des positions de la pluralité d'ancrages de suivi (202) sur la base d'une relation spatiale prédéterminée entre la pluralité d'ancrages de suivi et sur la base d'un processus d'étalonnage pour déterminer des positions de deux ou plus de la pluralité d'ancrages de suivi dans la relation spatiale prédéterminée par rapport à un emplacement de référence.

3. Système de suivi de soudure (206) selon la revendication 1, dans lequel le dispositif de soudage est l'au moins un élément parmi un chalumeau de soudage (102), un casque de soudage (104), des verres de sécurité ou un dispositif de fixation de soudage.

4. Système de suivi de soudure (206) selon la revendication 1, dans lequel le système de traitement est configuré pour déterminer l'emplacement du dispositif de soudage par rapport à l'emplacement de référence sur la base des positions de la pluralité d'ancrages de suivi (202).

5. Système de suivi de soudure (206) selon la revendication 1, dans lequel le signal de déclenchement est un signal radiofréquence et/ou dans lequel le signal de déclenchement est un signal radiofréquence.

6. Système de suivi de soudure (206) selon la revendication 1, dans lequel le dispositif de soudage a une pluralité d'étiquettes de suivi (204) fixées au dispositif de soudage, et le système de traitement est configuré pour déterminer l'emplacement du dispositif de soudage sur la base de la mesure des emplacements de la pluralité d'étiquettes de suivi et facultativement
dans lequel le système de traitement est configuré pour déterminer une orientation du dispositif de soudage sur la base de la mesure des emplacements de la pluralité d'étiquettes de suivi sur le dispositif de soudage et sur la base d'un modèle de corps rigide du dispositif de soudage et de la pluralité d'étiquettes de suivi sur le dispositif de soudage.

7. Système de suivi de soudure (206) selon la revendication 1, dans lequel le dispositif de soudage est un chalumeau de soudage (102), et le système de traitement est configuré pour déterminer une performance de soudage sur la base d'une pluralité d'emplacements du dispositif de soudage pendant une opération de soudage.

8. Système de suivi de soudure (206) selon la revendication 1, dans lequel l'étiquette de suivi (204) ou chacun des ancrages de suivi (202) est configuré pour transmettre le signal de réponse sous la forme d'un signal ultrasonore ayant une fréquence sélectionnée pour éviter une interférence avec un bruit à base de soudure.

9. Système de suivi de soudure (206) selon la revendication 8, comprenant en outre un dispositif de contrôle de bruit configuré pour mesurer des fréquences ultrasonores dans un environnement proche des ancrages de suivi (202) et de l'étiquette de suivi (204), et configuré pour transmettre une rétroaction représentative de l'au moins un canal ultrasonore ou une fréquence ultrasonore préférée ou un canal ultrasonore non préféré ou une fréquence ultrasonore non préférée.

10. Système de suivi de soudure (206) selon la revendication 9, dans lequel la pluralité d'ancrages de suivi (202) sont configurés pour transmettre le signal de déclenchement ayant des données représentatives de l'au moins un canal ultrasonore ou fréquence ultrasonore préféré(e) ou un canal ultrasonore ou fréquence ultrasonore non préféré(e), et l'étiquette de suivi (204) est configurée pour sélectionner un canal ultrasonore pour transmettre le signal de réponse sur la base des données dans le signal de déclenchement ou dans lequel l'étiquette de suivi ou chacun des ancrages de suivi est configuré pour recevoir la rétroaction depuis le moniteur de bruit et sélectionner un canal ultrasonore pour transmettre le signal de réponse sur la base de la rétroaction.

11. Système de suivi de soudure (206) selon la revendication 8, dans lequel l'étiquette de suivi (204) ou chacun des ancrages de suivi (202) est configuré pour sélectionner un canal ultrasonore pour transmettre le signal de réponse sur la base d'une table ayant des données de fréquence ultrasonore associées à l'au moins un paramètre de soudage ou un processus de soudage.

12. Système de suivi de soudure (206) selon la revendication 8, dans lequel la pluralité d'ancrages de suivi (202) sont configurés pour :
déterminer, sur la base d'une table ayant des données de fréquence ultrasonore associées à l'au moins un paramètre de soudage ou un processus de soudage, au moins un canal ultrasonore ou fréquence ultrasonore préféré ou un canal ultrasonore ou fréquence ultrasonore non préféré ; et
transmettre le signal de déclenchement ayant des données représentatives de l'au moins un canal ultrasonore ou une fréquence ultrasonore préférée ou un canal ultrasonore ou une fréquence ultrasonore non préférée, et l'étiquette de poursuite (204) est configurée pour sélectionner un canal ultrasonore pour transmettre le signal de réponse sur la base des données dans le signal de déclenchement.

13. Système de suivi de soudure (206) selon la revendication 1, dans lequel le dispositif de soudage comprend :
trois ou plus de trois étiquettes de suivi (204) séparées spatialement dans une configuration rigide fixe ;
deux étiquettes de suivi spatialement séparées reliées rigidement l'une à l'autre, chacune des étiquettes de suivi comprenant un accéléromètre configuré pour mesurer l'angle de l'étiquette de suivi par rapport à la gravité ; ou
une étiquette de suivi unique ayant un accéléromètre et un gyroscope,
dans lequel le système de traitement est configuré pour déterminer un emplacement et une orientation de six degrés de liberté du dispositif de soudage sur la base des trois ou plus de trois étiquettes de suivi, des deux étiquettes de suivi, ou de l'étiquette de suivi.

14. Système de suivi de soudure (206) selon la revendication 1, dans lequel la pluralité d'ancrages de suivi (202) sont fixés à une ou plusieurs structures rigides (208) définissant une relation spatiale rigide entre les ancrages de suivi fixés à la structure rigide respective et facultativement dans lequel les structures rigides sont portables.

15. Système de suivi de soudure (206) selon la revendication 1, dans lequel le système de traitement est configuré pour déterminer, sur la base de l'emplacement du dispositif de soudage et d'un modèle de corps rigide de l'étiquette de suivi (204) et du dispositif de soudage, l'au moins un élément parmi un angle de travail, un angle de déplacement, une direction de déplacement, une vitesse de déplacement, ou une distance de la pointe de contact au travail d'un chalumeau de soudage (102) pendant une opération de soudage sous tension ou une opération de soudage simulée.
